# EUROPEAN PATENT SPECIFICATION

(11) **EP 3 574 756 B1**
(45) Date of publication and mention of the grant of the patent: **05.07.2023**
(21) Application number: 19175914.1
(22) Date of filing: 22.05.2019
(51) Int. Cl.: A01M 7/00

(54) **AGRICULTURAL SPRAYER AND METHOD OF OPERATING AN AGRICULTURAL SPRAYER**
LANDWIRTSCHAFTLICHE FELDSPRITZE UND VERFAHREN ZUM BETREIBEN EINER LANDWIRTSCHAFTLICHEN FELDSPRITZE
PULVÉRISATEUR AGRICOLE ET PROCÉDÉ DE FONCTIONNEMENT D'UN PULVÉRISATEUR AGRICOLE

(30) Priority: 24.05.2018 US 201815988186; 05.12.2018 US 201816210209
(43) Date of publication of application: 04.12.2019
(73) Proprietor: Deere & Company, Moline, IL 61265 (US)
(72) Inventor: Paralikar, Ashish, 68163 Mannheim (DE); Sivaji, Raja, 68163 Mannheim (DE); Bharatiya, Paresh, 68163 Mannheim (DE)
(74) Representative: Reichert, Christian

(56) References cited:
- EP-A1- 3 366 129
- DE-A1-102015 111 889
- JP-A- H0 599 802
- US-A- 4 905 897
- US-A1- 2012 168 530
- US-A1- 2018 129 879
- JIAO LEIZI ET AL: "Monitoring spray drift in aerial spray application based on infrared thermal imaging technology", COMPUTERS AND ELECTRONICS IN AGRICULTURE, ELSEVIER, AMSTERDAM, NL, vol. 121, 30 December 2015 (2015-12-30), pages 135-140, XP029423670, ISSN: 0168-1699, DOI: 10.1016/J.COMPAG.2015.12.006

## Description

### FIELD OF THE DESCRIPTION

This invention relates to a spraying apparatus for an agricultural sprayer. More specifically, the invention relates to systems and methods for detecting full or partial plugging of a spray nozzle of an agricultural sprayer.

### BACKGROUND

Agricultural spraying systems are known. Such systems typically include a fluid line or conduit mounted on a foldable, hinged, or retractable and extendible boom. The fluid line is coupled to one or more spray nozzles mounted along the boom. Each spray nozzle is configured to receive the fluid and direct atomized fluid to a crop or field during application.

Spraying operations are generally intended to distribute a product (e.g. fertilizer, pesticides, etc.) evenly over an agricultural surface, such as a field or crop. Properly functioning spray nozzles ensure that dispersal of the product occurs evenly and is important to ensure crop yields.

EP 3 366 129 A1 discloses an agricultural sprayer with a boom and multiple spray nozzles provided along the boom. The sprayer includes a monitoring and control system in order to adjust the spray pattern of spray liquid dispensed by the nozzles, wherein the monitoring and control is based on 3 different basic values which represent the spray pressure, spray volume and drop size.

In a further publication paper titled "Monitoring spray drift in aerial spray application based on infrared thermal imaging technology", published in the Elsevier journal for "Computers and Electronics in Agriculture" (Elsevier, Amsterdam, NL), it is disclosed that infrared thermal imaging method combined with infrared image processing algorithms can be used to monitor the pesticide drift in aerial spray application. However, the adaptability and practicability for such techniques is directed to aerial spraying.

### SUMMARY

An agricultural sprayer includes at least one nozzle configured to receive a liquid and direct atomized liquid to an agricultural field in a dispersal area. A thermal imager is operably coupled to the agricultural sprayer and has a field of view behind the agricultural sprayer. The thermal imager is configured to provide an indication of a thermal reaction of the agricultural field in response to application of the atomized liquid. An output of the thermal imager is used to characterize operation of the at least one nozzle.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 illustrates an agricultural field sprayer with which embodiments described herein are particularly useful.
FIGS. 2A-2C illustrate example spray patterns from spray nozzles within a spray system.
FIGS. 3A and 3B illustrate systems for detecting spray nozzle plugging.
FIGS. 4A and 4B illustrate a multi-nozzle system employing RF-based plugging detection.
FIGS. 5A and 5B illustrate a multi-nozzle system employing RF-based plugging detection.
FIG. 6 is a flow diagram of a method of detecting a plugged nozzle using RF transmissions.
FIG. 7 illustrates an environment in which embodiments described herein are particularly useful.
FIG. 8 is a diagrammatic view of an agricultural sprayer employing thermal imaging-based sprayer detection in accordance with an embodiment of the present invention.
FIG. 9 is a top plan view of agricultural sprayer with a thermal imager applying liquid spray via sprayers to a field or agricultural surface in accordance with an embodiment of the present invention.
FIG. 10 is a diagrammatic view of an agricultural sprayer applying a liquid chemical to an agricultural surface using a number of spray nozzles and a thermal imager in accordance with an embodiment of the present invention.
FIG. 11 is a flow diagram of a method of assessing spray nozzle operation of an agricultural sprayer in accordance with an embodiment of the present invention.

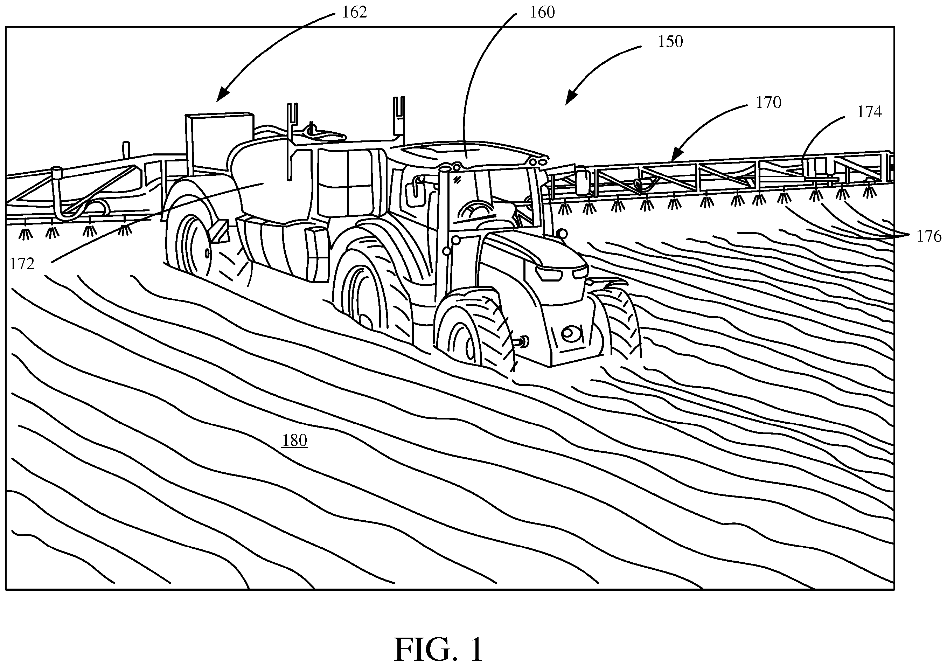

It is noted herewith that figures as FIG. 1, FIGS. 2A-2C, FIGS. 3A and 3B, FIGS. 4A and 4B, FIGS. 5A and 5B, FIG. 6 and FIG. 7are showing embodiments for explanatory purpose only and do not show embodiments in accordance with the present invention.

### DETAILED DESCRIPTION

Embodiments described herein generally employ electromagnetic radiation to detect a change in output from one or more spray nozzles. In one example, the electromagnetic radiation is in the form of radio-frequency transmissions. As the radio-frequency energy of the transmission passes through the droplets generated by the spray nozzle, the RF signal is changed in a detectable way. An RF receiver, configured to detect the RF signal that has passed through the spray, provides an output that is monitored to provide spray nozzle diagnostic indications. As used herein, radio-frequency (RF) is defined to mean electromagnetic energy having a frequency in the range from about 3kHz to 300 GHz.

In another example, the electromagnetic radiation is in the form of thermal imaging that is used to view a thermal change on the agricultural surface or crop upon receiving an applied liquid spray.

FIG. 1 illustrates an agricultural field sprayer with which embodiments described herein are particularly useful. FIG. 1 illustrates an agricultural environment 150 in which a tractor 160 is coupled to, and pulls, a towed sprayer 162. Towed sprayer 162 includes spray system 170, which has a tank 172 containing a liquid that is being applied to field 180. Tank 172 is coupled to boom 174, and the product is delivered to spray nozzles 176, which are spaced apart along boom 174. It is important, in environment 150, that product is evenly distributed across field 180. For example, if fertilizer is unevenly applied, it is wasted in areas of over-application, and areas of under-application can see reduced yields.

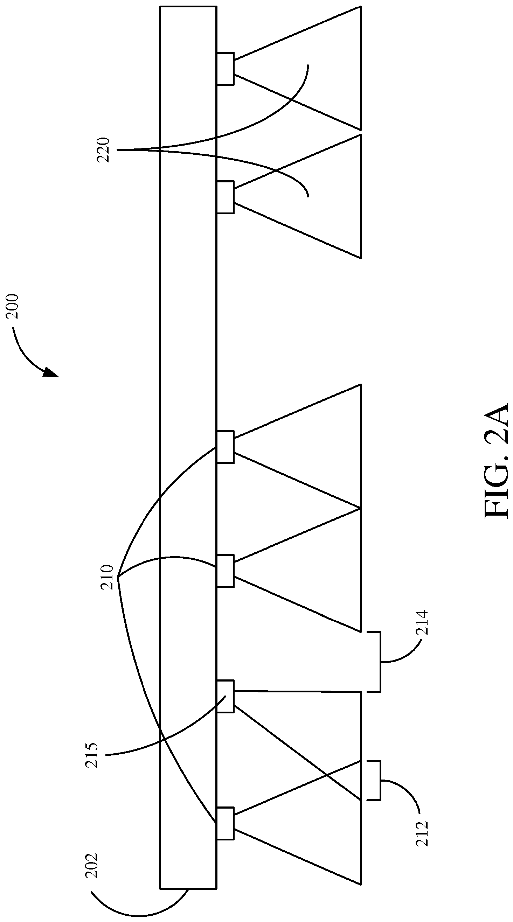

FIGS. 2A-2C illustrate example spray patterns from spray nozzles within a spray system. FIG. 2A is a diagrammatic representation of an example spray system 200 having a number of spray nozzles 210 spaced apart along boom 202. Each spray nozzle 210 generates a dispersal 220 of sprayed or otherwise atomized product. As illustrated in FIG. 2A, spray nozzle 215 is at least partially plugged, creating an overlap area 212, where distributed product is overapplied, and an uncovered area 214, where no product is applied.

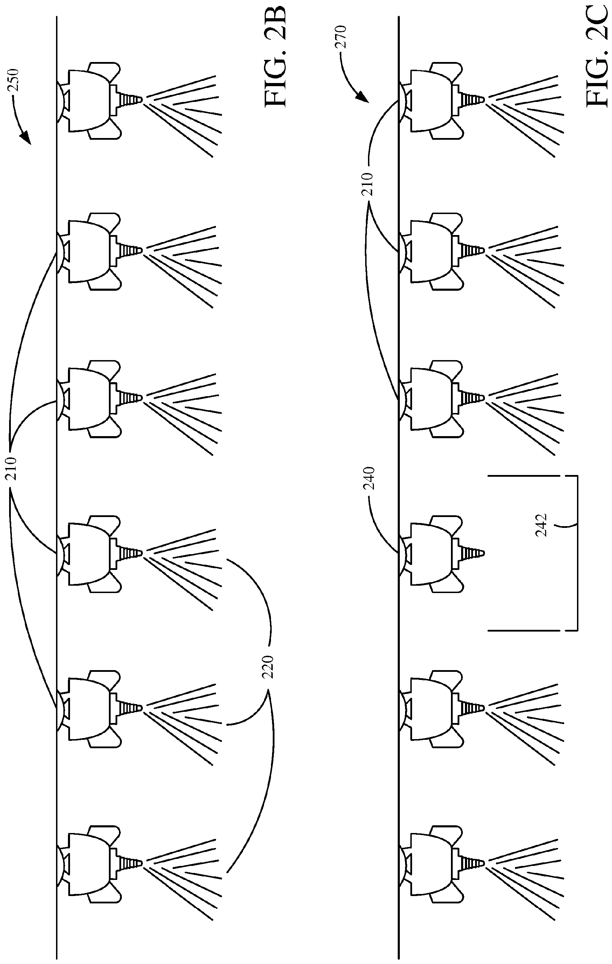

FIGS. 2B and 2C illustrate a contrast between a properly functioning spray system 250 and a spray system 270 that has a plugged spray nozzle 240. As illustrated in FIG. 2C, because spray nozzle 240 is fully plugged, area 242 will receive no dispersed product. This can result in lower yield for the portion of the field covered by area 242. Additionally, a plugged spray nozzle also impacts the spray quality as the target application rate is not achieved for a portion of the field.

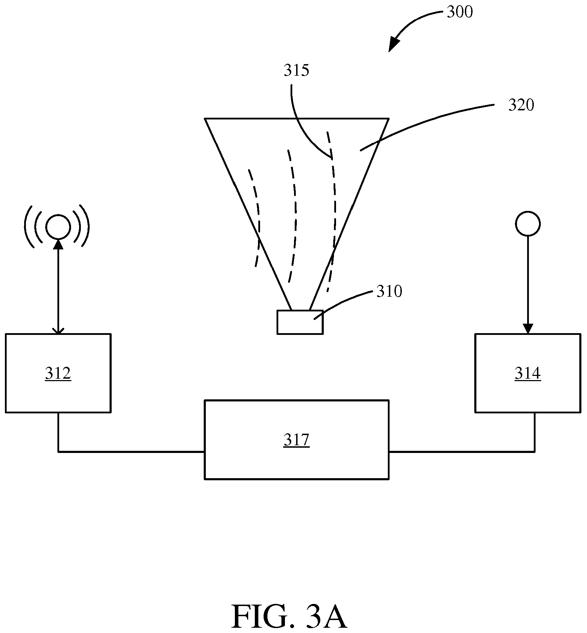

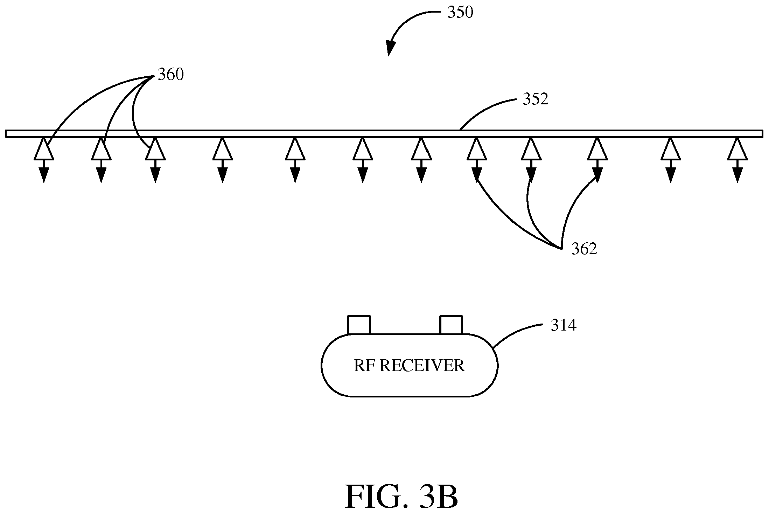

FIGS. 3A and 3B illustrate systems for detecting spray nozzle plugging. FIG. 3A is a diagrammatic view of RF-based plugged nozzle detection in accordance with one embodiment. Nozzle 310, when functioning properly, emits product in a predictable dispersal pattern 320. An RF transmission 315, sent from signal transmitter 312, passes through dispersal pattern 320, and is detected by RF signal detector 314. The RF signal 315 is detectably changed as it passes through dispersal pattern 320. This detectable change is generally a change in the attenuation of the signal. Thus, controller 317 coupled to transmitter 312 and receiver 314, can detect a change in the received signal by monitoring one or more characteristics of the RF signal (such as amplitude) using receiver 314. In this way, controller 317 detects changes indicative of plugging and provides a useful ability to diagnose, and/or correct, a plugged nozzle quickly. Controller 317 can be any suitable logic or circuit arrangements that are able to receive an output signal from receiver 314 and analyze the output to detect partial or full nozzle plugging. In one embodiment, controller 317 is a microprocessor. Controller 317 may be separate from each of transmitter 312 and receiver 314 or it may be combined with either of transmitter 312 or receiver 314. Advantageously, the techniques described herein employ RF energy to detect spray nozzle plugging and this do not employ optical techniques, which can be distorted or otherwise affected by dirt, dust, darkness or other variables.

One example of electromagnetic energy being affected by passing through droplets of liquid is known as rain fade. Rain fade describes the attenuation of the RF signal as it passes through and is at least partially absorbed by atmospheric snow, ice or rain. Rain fade is particularly evident at RF frequencies above 11 GHz and is typically a quantity that is compensated for in electromagnetic transmissions. One particularly useful range of RF signals for embodiments described herein is a frequency range from about 7 GHz to about 55 GHz.

FIG. 3B illustrates a spray system 350 for a plurality of nozzles 360 mounted on boom 352. In the illustrated example, each nozzle 360 is paired with an RF signal transmitter (not shown) that emits a signal 362. In one example, each transmitter transmits a signal of the same amplitude but with a different frequency to that the RF receiver can differentiate the various signals. The RF transmitters can be positioned close to each of nozzles 360, such that each RF signal will pass through the dispersal pattern of its respective nozzle and be received by RF signal receiver 314. For example, the signal transmitters can be placed next to each nozzle 360, as well as above or below each nozzle 360 as long as the RF signal passes through the dispersal pattern of the respective nozzle. Thus, the signal transmitters can be mounted directly to boom 352, or to each of nozzles 360, or in other appropriate locations.

In one embodiment, RF receiver 314 is configured to substantially simultaneously receive RF signals relative to each of nozzles 360. However, it is also contemplated that RF receiver 314 may be configured to alternatively receive and analyze incoming RF signals relative to each nozzle 360 sequentially. The system, thus is able to provide a substantially real-time indication of the current efficacy of each nozzle during operation.

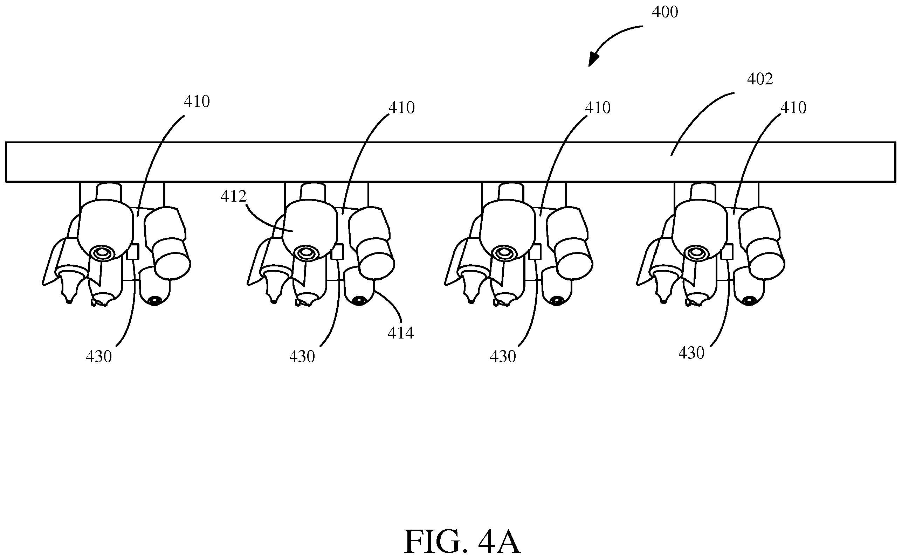

FIG. 4A illustrates a multi-nozzle spray system employing RF-based plugging detection. System 400 includes a boom 402 coupled to a plurality of multi-nozzle bodies 410. In one example, multi-nozzle bodies 410 are used to deliver effective coverage over more area in less time. Using multiple nozzles allow an increase in productivity by better tolerating changes in spray speed. The group of nozzles can be used to deliver a single product at varying rates depending on how many individual nozzles are engaged. Additionally, the utilization of various nozzles can provide better placement precision of the product. In one example, multi-nozzle bodies 410 are those sold in relation to the trade designation ExactApply^{™} Nozzle Control, available from John Deere Corporation, of Moline, Illinois.

As shown, each multi-nozzle body 410 is configured to mount a plurality of spray nozzles, such as first nozzle 412 and a second nozzle 414. First nozzle 412 and second nozzle 414 are diametrically opposite one another on multi-nozzle body 410. As illustrated in FIG. 4A, a multi-nozzle body 410 can be coupled to more than two nozzles; for example, FIG. 4A shows five nozzles for each multi-nozzle body 410. Each multi-nozzle body 410 also includes, or is coupled to, an RF transmitter 430 that is configured to emit an RF signal. In one example, the RF signal is omnidirectional emanating outwardly from the center of multi-nozzle body 410. As can be appreciated, the RF signal will pass through the dispersal patterns of any individual nozzles that are engaged. The RF signal passing through the droplets of each dispersal pattern will be attenuated, or otherwise affected. An RF receiver positioned to detect the RF signal after passing through such a dispersal pattern is then used to detect whether a particular nozzle's pattern has changed.

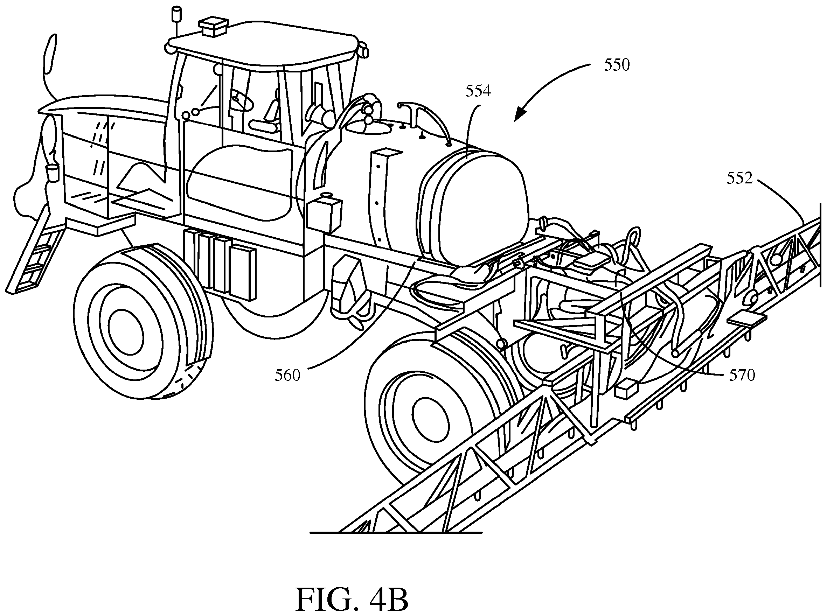

FIG. 4B illustrates an agricultural sprayer 550 with a pair of RF receivers 560, 570 to receive RF signals relative to multiple individual nozzles of a multi-nozzle body 410. As illustrated in FIG. 4B, first RF receiver 560 is mounted near solution tank 554, and second RF receiver 570 is located on the back side of a boom 552. Both first and second receivers 560, 570, receive the same signal from each multi-nozzle body RF transmitter 430. However, the signal received by first RF receiver 560 will be attenuated by the nozzle 412 (shown in FIG. 4A) while the signal received by second RF receiver 570 will be attenuated by nozzle 414 (shown in FIG. 4A). First and second receivers 560, 570 are coupled to a suitable controller, such as a controller of the agricultural machine, which analyzes the received signals to provide a plugging indication relative to the various nozzles, such as nozzles 412, and 414. This analysis may be as simple as merely comparing the two signals, such that any difference between the two signals can be used to indicate which nozzle of the pair of nozzles is plugged, either partially or fully.

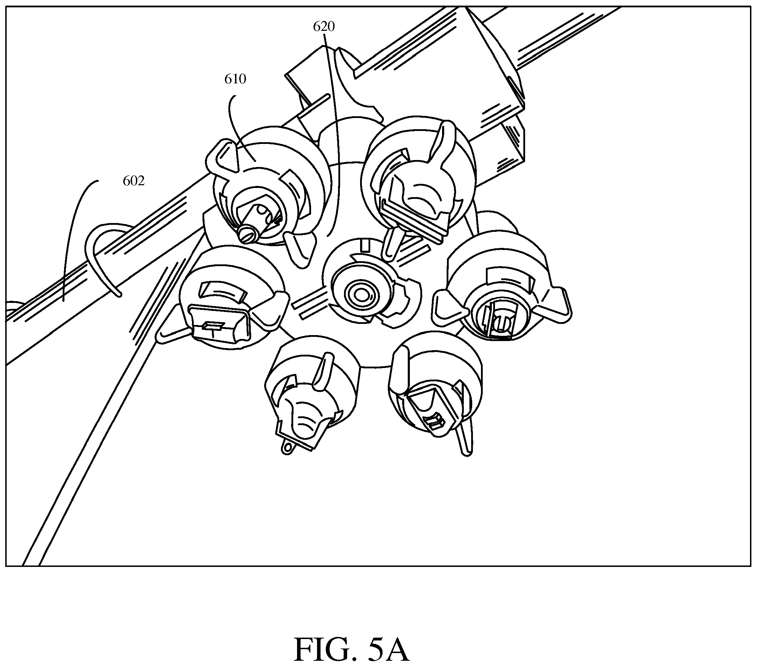

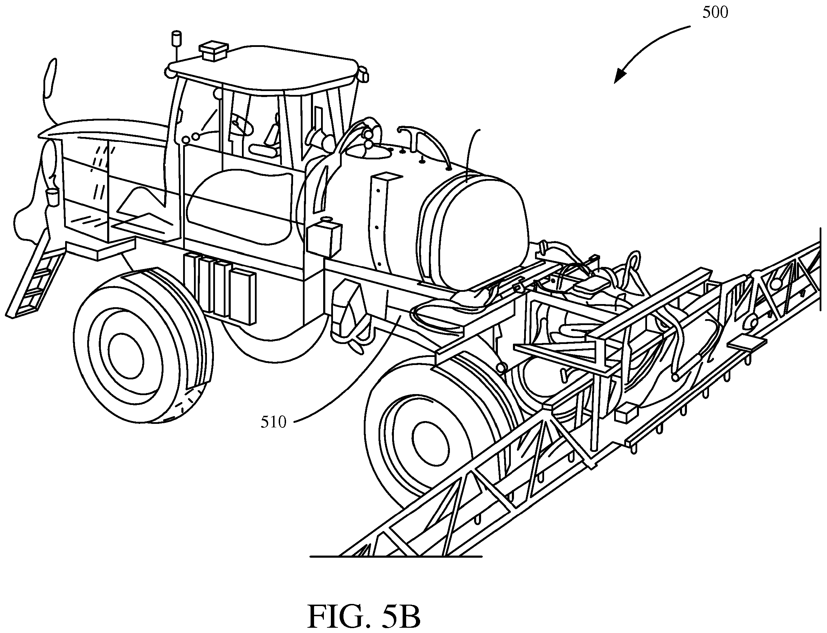

FIGS. 5A and 5B illustrate a multi-nozzle system employing RF-based plugging detection. FIG. 5A is a bottom view of a multi-nozzle body having a plurality of individual RF transmitters, where each individual nozzle 610 of the multi-nozzle assembly has an associated RF transmitter 620. When only a subset set of nozzles 610 is active (for example, one pair of nozzles 610), only a subset of the associated transmitters 620 are also active. The RF signal transmitted by each RF transmitter 620 is attenuated by surrounding spray nozzles 610.

In embodiments where multiple RF transmitters 620 are used, any suitable technique for disambiguating the signals can be employed. For example, one RF transmitter 620 may operate in a first frequency range, while another RF transmitter 620 may operate in a second frequency range that does not overlap the first frequency range. Additionally, or alternatively, the different RF transmitters 620 may provide different modulation of their respective RF signals. Further still, the different RF transmitters 620 may be operated in sequence such that only a single RF transmitter 620 is operating at any given time.

FIG. 5B illustrates an agricultural sprayer 500 with RF receiver 510 mounted proximate a solution tank and configured to detect signals from the various RF transmitters 620 (shown in FIG. 5A). In one embodiment, a controller coupled to RF receiver 510 is configured to compare data from each nozzle with default data stored in the controller, or in another suitable location, that indicates normal nozzle operation. Based on the comparison to the default data, the controller can determine if a particular nozzle or pair of nozzles has partial or full plugging.

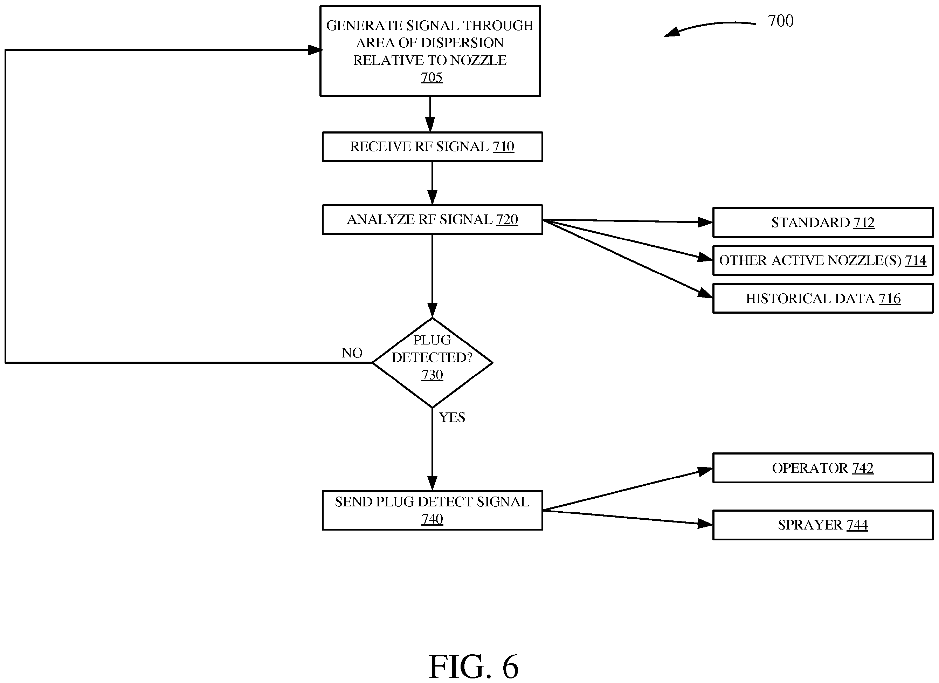

FIG. 6 illustrates a flow diagram of a method of detecting a plugged spray nozzle. Method 700 can be used to detect a partial or fully plugged status of a nozzle on an agricultural sprayer. Method 700 can also be used with at least some of the single and multi-nozzle systems described herein.

Method 700 begins at block 705 where an RF signal is generated and passes through a dispersal area of at least one nozzle.

At block 710, the RF signal is received using an RF receiver, such as receiver 510. Next, at block 720, the received RF signal is analyzed. Analyzing the received RF signal, can include comparing the signal with a standard signal obtained and stored during known-good spraying conditions, as indicated in block 712. The standard can include a manufacturer-provided range of acceptable RF signals, or an indication of RF signals that indicate partial or complete plugging. Analyzing the received RF signal can additionally or alternatively include comparing the received signal with one or more received signals relative to other nozzles, as indicated in block 714. For example, using an average of a set of received RF signals can indicate that one or more nozzles in a set of nozzles is plugged, for example because the RF signal received from the plugged nozzle is different from the average in a statistically significant way. Historical data for a nozzle can also be used to detect full or partial plugging, as indicated in block 716. For example, a received RF signal will change as plugging is experienced, and the RF signal travels through a thinner, or non-existent spray.

At block 730, if a partial or fully plugged sensor is detected, method 700 proceeds to block 740 where an indication of plugging is provided. However, in the event that no plugging is detected for a particular nozzle, method 700 returns to block 705, and thus repeats.

At block 740, an indication of a plugged nozzle status is generated and sent. For example, an indication can be sent directly to an operator, as indicated in block 742, for example as an audible or visual alert. Additionally, or alternatively, a notification can be provided to an operator's device, such as a mobile phone. The indication can also be sent directly to the agricultural sprayer, as indicated in block 744, for remedial action, such as automatically switching to a different pair of active nozzles in a multi-nozzle assembly.

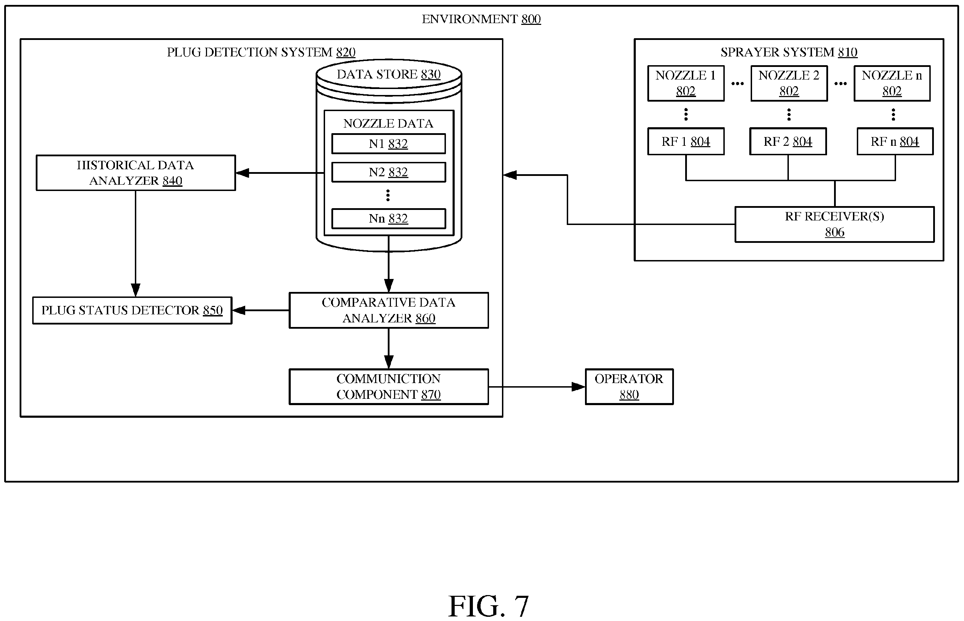

FIG. 7 illustrates an environment in which embodiments as described above are particularly useful. Sprayer system 810 is located within environment 800, and may be mounted to an agricultural vehicle, or towed by an agricultural vehicle, as illustrated in FIG. 1. Sprayer system 810 has one or more nozzles 802, either mounted directly to a boom, or to a nozzle body. Each nozzle 802 is associated with an RF transmitter 804. The signals generated by RF transmitter(s) 804 are configured to pass through respective dispersal areas of respective nozzles 802 and be attenuated or otherwise distorted by droplets of liquid in the dispersal area. The distorted RF signal is then detected by an RF receiver 806. Sprayer system 810 may include a single RF receiver 806 (such as described above with respect to FIGS. 5A and 5B) configured to receive signals alternatively from different RF transmitters 804 or sprayer system 810 may employ two or more RF receivers 806 (such as described above with respect to FIGS. 4A and 4B).

Environment 800 also includes an RF-based plug detection system 820, which may be located locally, for example as part of a computing unit within an agricultural vehicle, or remotely from an agricultural vehicle, for example within a separate computing system. RF-based plug detection system 820 includes storage component 830, which stores nozzle data 832, obtained from a plurality of nozzles 802, for example, Nozzle data 832 can be analyzed to detect a partial or completely plugged status within a nozzle 802. For example, historical data analyzer 840 can compare contemporaneously received nozzle data for a nozzle 802 to historical nozzle data 832 and detect a statistically significant difference. Additionally, comparative data analyzer 860 can compare nozzle data 832 from a single nozzle, to a known-good standard. For example, the known-good standard can include an average of contemporaneously received data 832 from all nozzles 802. Additionally, the known-good standard can include a standard provided from a manufacturer.

Based on a comparison, for example from historical data analyzer 840 or comparative data analyzer 860, plug status detector 850 detects that a nozzle 802 is experiencing partial or complete plugging, and generates a plugging indication. The plugging indication is then transmitted by communication component 870 to an operator 880, for example through a display on the agricultural vehicle, or through a display on a device associated with operator 880.

While examples described thus far generally use electromagnetic radiation in the form of radio-frequency transmissions to diagnose or otherwise detect conditions related to spray nozzle plugging, either partial or full, other forms of electromagnetic radiation can also be used in accordance with examples described herein. For example, electromagnetic radiation in the form of thermal imaging can be used in addition to or instead of the radio-frequency transmission techniques. More specifically, embodiments may employ a thermal imaging camera for detection of nozzle blockage and/or spray characterization. When the sprayed liquid chemical comes in contact with plants, thermal changes occur to the plants. These thermal changes are captured by a thermal imaging camera that is installed either on the spraying device, or other suitable device, and analyzed to determine whether any nozzle of the agricultural is partially or fully blocked. This analysis generally employs using a heat signature to determine the spraying pattern. During nominal application, substantially all sprayed crops will have the same thermal characteristics. If, however, one or more of the spray nozzles begin to function poorly or not at all, then the crop immediately below and behind the malfunctioning nozzle(s) will not undergo the thermal changes induced by receiving a liquid spray and such condition is detectable using thermal imaging. In one example, the thermal change is due to evaporative cooling of a liquid chemical being applied to a dry crop or surface. Thus, as the liquid evaporates, the temperature of the sprayed crop or surface is reduced relative to the surrounding environment. This is just one example of a thermodynamic or chemical effect that causes the sprayed crop or surface to change temperature relative to the ambient background. It is also contemplated that other conditions could also result in thermal changes of the sprayed crops or surface. For example, a chemical reaction between the applied chemical and the crop could be exothermic or endothermic. Further, the applied chemical could be heated or cooled such that it is applied at a temperature that is different than the ambient environment.

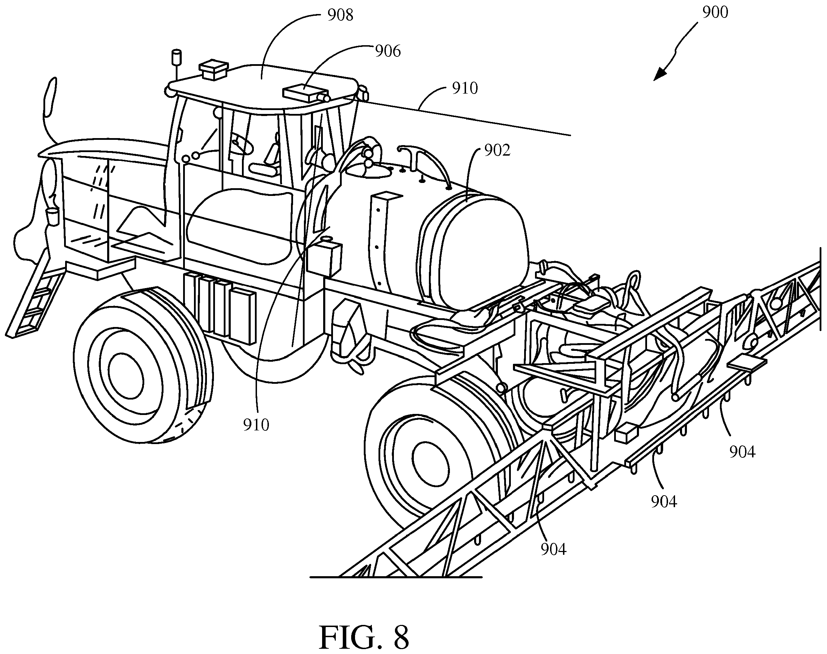

FIG. 8 is a diagrammatic view of an agricultural sprayer employing thermal imaging-based sprayer detection in accordance with an embodiment of the present invention. Sprayer 900 includes a tank 902 containing a liquid chemical to be applied via one or more nozzles 904 to a crop. Additionally, agricultural sprayer 900 also includes a thermal imaging camera 906 disposed on roof 908 and arranged to have a field of view 910 that substantially encompasses the sprayed width behind agricultural sprayer 900. Thermal imaging camera 906 can be any suitable device that provides imaging in the form of either discrete images, or video, based on infrared heat detection. Typically, such cameras view the electromagnetic spectrum of approximately 9,000-14,000 nanometers and produce images of radiation in that wavelength spectrum. Thermal imaging camera 906 may be coupled to an analysis device, such as a controller of agricultural sprayer 900, or a plug detection system such as plug detection system 820 (shown in FIG. 7) in order to analyze one or more thermal images to characterize sprayer or nozzle performance. The actual connection between thermal imaging camera 906 and the analysis device can be via a wired connection, a wireless connection, such as WIFI, or any other suitable technique. Additionally, or alternately, the thermal image may simply be provided to the operator of agricultural sprayer 900 to provide an indication of sprayer efficacy.

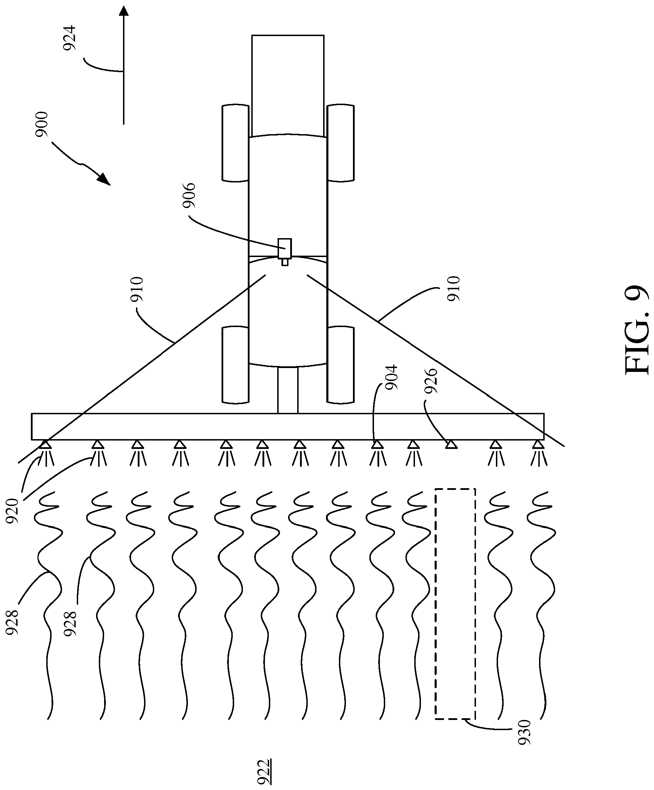

FIG. 9 is a top plan view of agricultural sprayer 900 applying liquid spray 920 via sprayers 904 to a field or agricultural surface 922. Agricultural sprayer 900 is moving in the direction indicated by arrow 924 and all sprayer nozzles 904, with the exception of nozzle 926, are spraying essentially nominally, As the liquid chemical is applied to agricultural surface 922, a detectable thermal change begins immediately and then stabilizes as the liquid dries onto the agricultural surface. The diagrammatic representation of the thermal change is indicated at reference numerals 928. As can be seen, in the portion of agricultural surface 922 that is immediately behind malfunctioning sprayer nozzle 926, no thermal change is occurring. Thermal imaging system 906 essentially sees this region 930 within field of view 910 and can provide an automatic indication of the malfunction of nozzle 926 to the operator of agricultural sprayer 900. Further, a video output of the image provided by thermal imaging system 906 may also provide an intuitive output to the operator who may simply see that the applied thermal field is not even and that something is wrong or at least requiring additional attention or diagnosis. The identification of a malfunctioning nozzle is important both in terms of identifying such occurrence quickly such that crop effects can be mitigated, but also to ensure that the situation is repaired or otherwise ameliorated as quickly as possible such that effective spraying can resume quickly.

While the embodiment described with respect to FIGS. 8 and 9 provide a thermal imaging system mounted to an agricultural sprayer and configured to observe or otherwise detect the application of a sprayed liquid chemical to an agricultural crop or field, embodiments can be employed where the thermal imaging system is not directly attached to the agricultural sprayer.

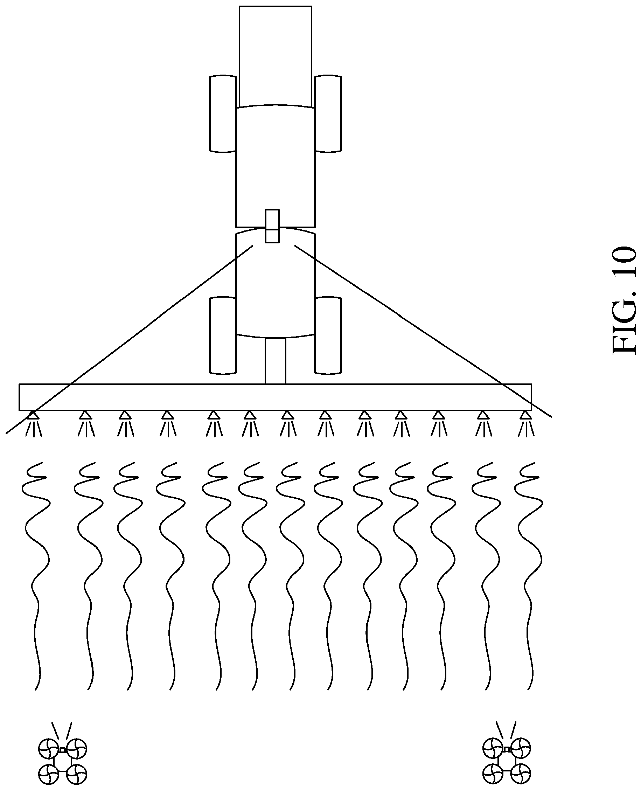

FIG. 10 is a diagrammatic view of an agricultural sprayer applying a liquid chemical to an agricultural surface using a number of spray nozzles. However, one or more unmanned aerial vehicles (drones) are programmed to follow the agricultural sprayer and include a thermal imaging system that is directed to the agricultural field immediately following the sprayers. Thus, the thermal imaging system(s) on the drone(s) actually detects the thermal images. The drone image data can be transmitted to a suitable analytical device, such as plug detection system 820, or provided to a display for the operator of agricultural sprayer 900.

Using thermal imaging of the application of a liquid chemical to an agricultural surface or crop may also provide the identification of problems even as they are beginning and may aid in the preventative maintenance of spray nozzles.

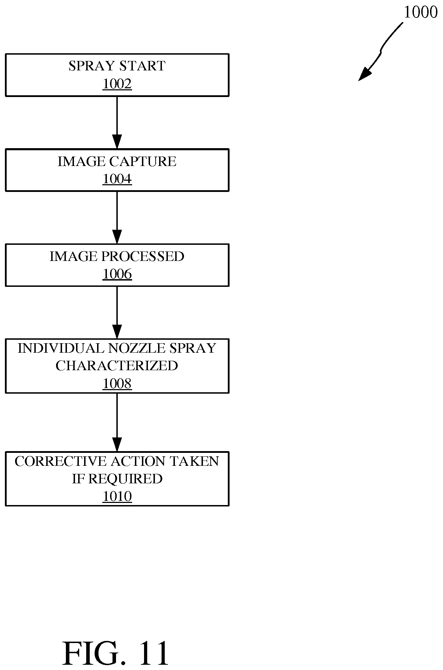

FIG. 11 is a flow diagram of a method of assessing spray nozzle operation of an agricultural sprayer in accordance with an embodiment of the present invention. Method 1000 begins at block 1002 marked spray start. At block 1002, the agricultural sprayer begins applying a liquid chemical to a crop or agricultural field. Next, at block 1004, a thermal image of the crop or field with the liquid chemical just applied is acquired. At block 1006, the acquired or captured thermal image is processed by an image processor to identify a heat signature and determine the spray pattern. Next, at block 1008, individual nozzle spray is characterized by the image processor. Such characterization can include providing an indication (such as a percentage) regarding a degree to which the nozzle is plugged. Finally, at block 1010, if the analysis of the thermal image indicates that corrective action is required (for example, if the plugging percentage is above a selected threshold), such action is taken. This may include replacing or repairing a plugged nozzle, or performing any suitable nozzle operations, such as purging or cleaning, in order to restore nozzle operation.

The image processing can be performed by a user, any suitable algorithm or artificial intelligence routine, or other suitable techniques. An output can be provided to the user that characterizes the blockage for each nozzle as a percentage of total blockage, and may provide an indication of whether a nozzle should be cleaned versus replaced.

Also, the figures show a number of blocks with functionality ascribed to each block. It will be noted that fewer blocks can be used so the functionality is performed by fewer components. Also, more blocks can be used with the functionality distributed among more components.

## Claims

1. An agricultural sprayer (900), comprising:
at least one nozzle (904, 926) configured to receive a liquid and direct atomized liquid to an agricultural field (922) in a dispersal area; **characterized in that**
a thermal imager (906) is operably coupled to the agricultural sprayer (900) and having a field of view (910) behind the agricultural sprayer (900), the thermal imager (906) being configured to provide an indication of a thermal reaction of the agricultural field (922) in response to application of the atomized liquid;
wherein an output of the thermal imager (906) is used to characterize operation of the at least one nozzle (904, 926), wherein the output of the thermal imager (906) is coupled to an image processor that is configured to provide operation characterization with respect to the at least one nozzle (904, 926); and
wherein the agricultural sprayer (900) includes a plurality of nozzles (904, 926) spaced along a spray boom, and wherein the thermal imager (906) has a field of view (910) that encompasses all of the plurality of nozzles (904, 926).

2. The agricultural sprayer (900) of claim 1, wherein the thermal imager (906) is configured to respond to electromagnetic radiation in the wavelength range from about 9000 nanometers to about 14000 nanometers.

3. The agricultural sprayer (900) of claim 1 or 2, wherein the thermal imager (906) is configured to acquire discrete thermal images of the agricultural field (922).

4. The agricultural sprayer (900) of one of the claims 1 to 3, wherein the thermal imager (906) provides a thermal video output.

5. The agricultural sprayer (900) of one of the claims 1 to 4, wherein the output of the thermal imager (906) is provided to an operator of the agricultural sprayer (900).

6. The agricultural sprayer (900) of one of the claims 1 to 5, wherein the output of the thermal imager (906) is provided to a plug detection system to characterize performance of the at least one nozzle (904, 926).

7. The agricultural sprayer (900) of one of the claims 1 to 6, and further comprising:
a radio-frequency (RF) transmitter disposed to generate an RF signal that passes through the dispersal area, wherein the RF signal is detectably changed when interacting with droplets of the atomized liquid;
a first RF receiver disposed to receive the RF signal after the RF signal passes through the dispersal area, the first RF receiver providing an output indicative of the RF signal; and
a controller coupled to the first RF receiver and the thermal imager (906), the controller being configured to detect plugging of the at least one nozzle (904, 926) based on the output of the first RF receiver and the thermal imager (906).

8. A method of operating an agricultural sprayer (900) of one of the claims 1 to 7, the method comprising:
initiating (1002) a spraying operation using a plurality of spray nozzles (904, 926) spaced along a spray boom to apply a liquid chemical to an agricultural field (922);
directing a field of view (910) of at least one thermal imager (906) to a portion of the agricultural field (922) immediately following the spray boom;
obtaining (1004) thermal image information with the at least one thermal imager (906);
processing (1008) the thermal image information to characterize operation of at least one of the spray nozzles (904, 926); and
providing an output (1010) indicative of the nozzle characterization.

9. The method of claim 8, wherein the thermal imager (906) is mounted relative to the agricultural sprayer (900).

10. The method of claim 8 or 9, wherein the thermal imager (906) is mounted to an unmanned vehicle that is programmed to follow the spray.

11. The method of claim 10, wherein the unmanned vehicle is an aerial drone.

12. The method of one of the claims 8 to 11, and further comprising providing the thermal image information to an operator of the agricultural sprayer (900).

13. The method of one of the claims 8 to 12, wherein the characterization of the at least one nozzle (904, 926) includes providing a percentage that is indicative of a degree of nozzle plugging.

## Patentansprüche

1. Landwirtschaftliche Sprüheinrichtung (900), umfassend:
mindestens eine Düse (904, 926), die zum Empfangen einer Flüssigkeit und Richten von zerstäubter Flüssigkeit auf ein landwirtschaftliches Feld (922) in einem Verteilungsbereich ausgelegt ist, **dadurch gekennzeichnet, dass**
ein Wärmebildgerät (906) funktionell mit der landwirtschaftlichen Sprüheinrichtung (900) gekoppelt ist und ein Sichtfeld (910) hinter der landwirtschaftlichen Sprüheinrichtung (900) aufweist, wobei das Wärmebildgerät (906) eine Anzeige einer thermischen Reaktion des landwirtschaftlichen Feldes (922) in Reaktion auf die Anwendung der zerstäubten Flüssigkeit bereitstellt;
wobei eine Ausgabe des Wärmebildgeräts (906) zum Charakterisieren des Betriebs der mindestens einen Düse (904, 926) verwendet wird, wobei die Ausgabe des Wärmebildgeräts (906) mit einem Bildprozessor gekoppelt ist, der zum Bereitstellen von Betriebscharakterisierung in Bezug auf die mindestens eine Düse (904, 926) ausgelegt ist; und
wobei die landwirtschaftliche Sprüheinrichtung (900) eine Mehrzahl von Düsen (904, 926) umfasst, die entlang eines Sprühbalkens in Abständen angeordnet ist, und wobei das Wärmebildgerät (906) ein Sichtfeld (910) aufweist, dass alle der Mehrzahl von Düsen (904, 926) umfasst.

2. Landwirtschaftliche Sprüheinrichtung (900) nach Anspruch 1, wobei das Wärmebildgerät (906) so ausgelegt ist, dass es auf elektromagnetische Strahlung im Wellenlängenbereich von etwa 9000 Nanometer bis etwa 14000 Nanometer anspricht.

3. Landwirtschaftliche Sprüheinrichtung (900) nach Anspruch 1 oder 2, wobei das Wärmebildgerät (906) zum Erfassen von diskreten Wärmebildern des landwirtschaftlichen Feldes (922) ausgelegt ist.

4. Landwirtschaftliche Sprüheinrichtung (900) nach einem der Ansprüche 1 bis 3, wobei das Wärmebildgerät (906) eine Wärmebild-Videoausgabe bereitstellt.

5. Landwirtschaftliche Sprüheinrichtung (900) nach einem der Ansprüche 1 bis 4, wobei die Ausgabe des Wärmebildgeräts (906) für einen Bediener der landwirtschaftlichen Sprüheinrichtung (900) bereitgestellt wird.

6. Landwirtschaftliche Sprüheinrichtung (900) nach einem der Ansprüche 1 bis 5, wobei die Ausgabe des Wärmebildgeräts (906) für ein Verstopfungserkennungssystem zum Charakterisieren der Leistung der mindestens einen Düse (904, 900) bereitgestellt wird.

7. Landwirtschaftliche Sprüheinrichtung (900) nach einem der Ansprüche 1 bis 6, ferner umfassend:
einen Hochfrequenz-(HF-)Sender, der zum Erzeugen eines HF-Signals eingerichtet ist, das durch den Verteilungsbereich durchtritt, wobei das HF-Signal bei Wechselwirkung mit Tröpfchen der zerstäubten Flüssigkeit erkennbar verändert wird;
einen ersten HF-Empfänger, der so ausgelegt ist, dass er das HF-Signal nach seinem Durchtritt durch den Verteilungsbereich empfängt, wobei der erste HF-Empfänger eine Ausgabe bereitstellt, die das HF-Signal anzeigt; und
eine Steuerung, die mit dem ersten HF-Empfänger und dem Wärmebildgerät (906) gekoppelt ist, wobei die Steuerung so ausgelegt ist, dass sie Verstopfung der mindestens einen Düse (904, 926) basierend auf der Ausgabe des ersten HF-Empfängers und des Wärmebildgeräts (906) erkennt.

8. Verfahren zum Betrieb einer landwirtschaftlichen Sprüheinrichtung (900) nach einem der Ansprüche 1 bis 7, wobei das Verfahren umfasst:
Starten (1002) eines Sprühbetriebs unter Verwendung einer Mehrzahl von Düsen (904, 926), die entlang eines Sprühbalkens in Abständen angeordnet ist, um eine flüssige Chemikalie auf ein landwirtschaftliches Feld (922) anzuwenden;
Richten eines Sichtfeldes (910) mindestens eines Wärmebildgeräts (906) auf einen Abschnitt des landwirtschaftlichen Feldes (922) unmittelbar nach dem Sprühbalken;
Erhalten (1004) von Wärmebildinformationen mit dem mindestens einen Wärmebildgerät (906);
Verarbeiten (1008) der Wärmebildinformationen, um den Betrieb mindestens einer der Sprühdüsen (904, 9026) zu charakterisieren; und
Bereitstellen einer Ausgabe (1010), die die Düsencharakterisierung anzeigt.

9. Verfahren nach Anspruch 8, wobei das Wärmebildgerät (906) relativ zur landwirtschaftlichen Sprüheinrichtung (900) montiert ist.

10. Verfahren nach Anspruch 8 oder 9, wobei das Wärmebildgerät (906) an einem unbemannten Fahrzeug montiert ist, das so programmiert ist, dass es der Zerstäuberflüssigkeit folgt.

11. Verfahren nach Anspruch 10, wobei das unbemannte Fahrzeug eine Flugdrohne ist.

12. Verfahren nach einem der Ansprüche 8 bis 11 und ferner umfassend ein Bereitstellen von Wärmebildinformationen für einen Bediener der landwirtschaftlichen Sprüheinrichtung (900).

13. Verfahren nach einem der Ansprüche 8 bis 12, wobei die Charakterisierung der mindestens einen Düse (904, 926) ein Bereitstellen eines Prozentsatzes umfasst, der einen Grad der Düsenverstopfung anzeigt.

## Revendications

1. Pulvérisateur agricole (900) comprenant :
au moins une buse (904, 926) configurée pour recevoir un liquide et diriger le liquide atomisé vers un champ agricole (922) dans une zone de dispersion ; **caractérisé en ce que** :
un imageur thermique (906) est couplé de manière opérationnelle au pulvérisateur agricole (900) et a un champ de vision (910) derrière le pulvérisateur agricole (900), l'imageur thermique (906) étant configuré pour fournir une indication d'une réaction thermique du champ agricole (922) en réponse à l'application du liquide atomisé ;
où une sortie de l'imageur thermique (906) est utilisée pour caractériser le fonctionnement de l'au moins une buse (904, 926), où la sortie de l'imageur thermique (906) est couplée à un processeur d'image qui est configuré pour fournir une caractérisation de fonctionnement en ce qui concerne l'au moins une buse (904, 926) ; et
où le pulvérisateur agricole (900) comprend une pluralité de buses (904, 926) espacées le long d'une rampe de pulvérisation, et où l'imageur thermique (906) a un champ de vision (910) qui englobe toutes les buses de la pluralité de buses (904, 926).

2. Pulvérisateur agricole (900) selon la revendication 1, dans lequel l'imageur thermique (906) est configuré pour répondre au rayonnement électromagnétique dans la plage de longueurs d'ondes s'étendant d'environ 9000 nanomètres à environ 14000 nanomètres.

3. Pulvérisateur agricole (900) selon la revendication 1 ou la revendication 2, dans lequel l'imageur thermique (906) est configuré pour acquérir des images thermiques discrètes du champ agricole (922).

4. Pulvérisateur agricole (900) selon l'une des revendications 1 à 3, dans lequel l'imageur thermique (906) fournit une sortie vidéo thermique.

5. Pulvérisateur agricole (900) selon l'une des revendications 1 à 4, dans lequel la sortie de l'imageur thermique (906) est fournie à un opérateur du pulvérisateur agricole (900).

6. Pulvérisateur agricole (900) selon l'une des revendications 1 à 5, dans lequel la sortie de l'imageur thermique (906) est fournie à un système de détection d'obstruction pour caractériser la performance de l'au moins une buse (904, 926).

7. Pulvérisateur agricole (900) selon l'une des revendications 1 à 6, comprenant en outre :
un émetteur de radiofréquences (RF) disposé pour générer un signal RF qui traverse la zone de dispersion, où le signal RF est modifié de manière détectable lorsqu'il interagit avec les gouttelettes du liquide atomisé ;
un premier récepteur RF disposé pour recevoir le signal RF après que le signal RF a traversé la zone de dispersion, le premier récepteur RF fournissant une sortie indicative du signal RF ; et
un contrôleur couplé au premier récepteur RF et à l'imageur thermique (906), le contrôleur étant configuré pour détecter l'obstruction d'au moins une buse (904, 926) sur la base de la sortie du premier récepteur RF et de l'imageur thermique (906).

8. Procédé de fonctionnement d'un pulvérisateur agricole (900) selon l'une des revendications 1 à 7, le procédé comprenant les étapes suivantes :
initier (1002) une opération de pulvérisation à l'aide d'une pluralité de buses de pulvérisation (904, 926) espacées le long d'une rampe de pulvérisation pour appliquer un produit chimique liquide à un champ agricole (922) ;
diriger un champ de vision (910) d'au moins un imageur thermique (906) vers une partie du champ agricole (922) immédiatement après la rampe de pulvérisation ;
obtenir (1004) des informations d'image thermique avec l'au moins un imageur thermique (906) ;
traiter (1008) les informations d'image thermique pour caractériser le fonctionnement d'au moins une des buses de pulvérisation (904, 926) ; et
fournir une sortie (1010) indicative de la caractérisation de la buse.

9. Procédé selon la revendication 8, dans lequel l'imageur thermique (906) est monté par rapport au pulvérisateur agricole (900).

10. Procédé selon la revendication 8 ou la revendication 9, dans lequel l'imageur thermique (906) est monté par rapport à un véhicule sans pilote qui est programmé pour suivre la pulvérisation.

11. Procédé selon la revendication 10, dans lequel le véhicule sans pilote est un drone aérien.

12. Procédé selon l'une des revendications 8 à 11, et comprenant en outre de fournir les informations d'image thermique à un opérateur du pulvérisateur agricole (900).

13. Procédé selon l'une des revendications 8 à 12, dans lequel la caractérisation de l'au moins une buse (904, 926) comprend de fournir un pourcentage qui est indicatif d'un degré d'obstruction de la buse.
